# EUROPÄISCHE PATENTSCHRIFT

(11) **EP 3 882 494 B1**
(45) Veröffentlichungstag und Bekanntmachung des Hinweises auf die Patenterteilung: **07.09.2022**
(21) Anmeldenummer: 21157279.7
(22) Anmeldetag: 16.02.2021
(51) Int. Cl.: F16H 57/04

(54) **AXIALLAGER ZWISCHEN ZWEI SONNENWELLEN**
AXIAL BEARING BETWEEN TWO SUN SHAFTS
PALIER AXIAL ENTRE DEUX PIGNONS PLANÉTAIRES

(30) Priorität: 16.03.2020 DE 102020203347
(43) Veröffentlichungstag der Anmeldung: 22.09.2021
(73) Patentinhaber: ZF Friedrichshafen AG, 88046 Friedrichshafen (DE)
(72) Erfinder: Fauck, Matthias, 58452 Witten (DE); Fischer, Steffen, 59394 Nordkirchen-Südkirchen (DE)
(74) Vertreter: ZF Friedrichshafen AG

(56) Entgegenhaltungen:
- CN-A- 102 748 431
- JP-A- 2011 214 586
- JP-A- 2014 077 247
- US-A- 2 357 561
- US-A- 5 813 228
- US-B2- 8 641 569

## Beschreibung

Die Erfindung betrifft ein Getriebe nach dem Oberbegriff von Anspruch 1, siehe zum Beispiel US 5 813 228 A.

Aus dem Stand der Technik sind Getriebe mit hintereinandergeschalteten, koaxial angeordneten Planetenstufen bekannt. Entsprechend sind die Sonnenwellen der Planetenstufen koaxial hintereinander angeordnet. Die Sonnenwellen werden separat gelagert.

Der Erfindung liegt die Aufgabe zugrunde, die Lagerung koaxial hintereinander angeordneter Sonnenwellen zu verbessern. Diese Aufgabe wird gelöst durch ein Getriebe nach Anspruch 1. Bevorzugte Weiterbildungen sind in den Unteransprüchen enthalten und ergeben sich aus nachfolgender Beschreibung sowie dem in der Figur dargestellten Ausführungsbeispiel.

Das Getriebe weist mindestens zwei Sonnenwellen auf. Eine Sonnenwelle ist eine Welle, die drehfest mit einem Sonnenrad einer Planetenstufe verbunden ist. Zu der Planetenstufe gehören neben dem Sonnenrad ein Planetenträger, ein Hohlrad und ein oder mehrere Planetenräder. Die Planetenräder sind drehbar in dem Planetenträger gelagert und kämmen jeweils mit dem Hohlrad und/oder dem Sonnenrad.

Die mindestens zwei Sonnenwellen des erfindungsgemäßen Getriebes sind koaxial angeordnet. Dies bedeutet, dass ihre Mittelachsen übereinstimmen. Die Mittelachsen sind identisch mit der Drehachse der jeweiligen Sonnenwelle. Somit stimmen auch die Drehachsen der mindestens zwei Sonnenwellen des erfindungsgemäßen Getriebes überein. Die mindestens zwei Sonnenwellen sind also um eine gemeinsame Drehachse drehbar gelagert.

Weiterhin sind die mindestens zwei Sonnenwellen des erfindungsgemäßen Getriebes überwiegend senkrecht ausgerichtet. Dies ist gleichbedeutend damit, dass ihre Mittelachsen überwiegend senkrecht ausgerichtet sind.

Eine Achse ist überwiegend senkrecht ausgerichtet, wenn sie mit einer Vertikalen, das heißt einer vertikal verlaufenden Geraden, einen Winkel von weniger als 45° einschließt. Insbesondere kann die Achse exakt senkrecht ausgerichtet sein, sodass dieser Winkel 0° beträgt.

Erfindungsgemäß ist mindestens ein Lager vorgesehen, dass axial zwischen den mindestens zwei Sonnenwellen angeordnet ist. Diese Anordnung impliziert, dass zwischen den Sonnenwellen kein axialer Überlapp besteht. Es lässt sich also eine radial ausgerichtete, das heißt orthogonal zu den Mittel- bzw. Drehachsen der Sonnenwellen ausgerichtete Ebene finden, die zwischen den Sonnenwellen hindurch verläuft, sodass eine erste Sonnenwelle auf einer Seite der Ebene und eine zweite Sonnenwelle auf einer anderen Seite der Ebene liegt.

Das Lager ist axial zwischen den Sonnenwellen angeordnet, wenn es zwischen zwei einander zuweisenden Stirnflächen jeweils einer Sonnenwelle angeordnet ist. Eine Stirnfläche einer Welle ist ein Teil der Oberfläche der Welle, der die Welle in axialer Richtung begrenzt. Die Welle ist vollständig auf einer Seite der Stirnfläche angeordnet. Auf einer anderen Seite der Stirnfläche befindet sich kein Teil der Welle. Die Welle weist zwei Stirnflächen auf einander gegenüberliegenden Seiten der Welle auf. Sie befindet sich vollständig zwischen ihren beiden Stirnflächen. Die Welle ist also auf einer ersten Seite einer ersten Stirnfläche und auf einer ersten Seite einer zweiten Stirnfläche angeordnet. Kein Teil der Welle befindet sich auf einer zweiten Seite der ersten Stirnfläche. Ebenso befindet sich kein Teil der Welle auf einer zweiten Seite der zweiten Stirnfläche.

Das zwischen den mindestens zwei Sonnenwellen angeordnete Lager ist als Axiallager ausgebildet. Es stützt die Sonnenwellen axial gegeneinander ab. Dies bedeutet, dass das Lager ausgebildet ist, in axialer Richtung wirkende Kräfte zwischen den Sonnenwellen zu leiten. Im Einzelnen ist das Lager ausgebildet, in axialer Richtung wirkende Kräfte, die von einer ersten Sonnenwelle aufgebracht werden, in eine zweite Sonnenwelle einzuleiten. Umgekehrt ist es ausgebildet, in axialer Richtung wirkende Kräfte, die von der zweiten Sonnenwelle aufgebracht werden, in die erste Sonnenwelle einzuleiten. Dies geschieht derart, dass ein durch das Lager festgelegter axialer Abstand zwischen den Sonnenwellen unverändert bleibt.

Die überwiegend senkrechte Ausrichtung der Sonnenwellen bedingt, dass eine Sonnenwelle höher angeordnet ist als die andere. Es gibt also eine obere Sonnenwelle und eine untere Sonnenwelle. Die obere Sonnenwelle ist höher angeordnet als die untere Sonnenwelle. Das Lager befindet sich unterhalb der oberen Sonnenwelle und oberhalb der unteren Sonnenwelle.

Durch die überwiegend senkrechte Ausrichtung haben die Sonnenwellen zudem jeweils eine obere und eine untere Stirnfläche. Die obere Stirnfläche zeichnet sich dadurch aus, dass sie höher angeordnet ist als die untere Stirnfläche.

Die Erfindung sieht vor, dass die obere Sonnenwelle mindestens eine Ölleitung ausbildet. Vorzugsweise bildet die obere Sonnenwelle die Ölleitung einstückig aus. Beispielsweise hat die Ölleitung die Form einer oder mehrerer in die obere Sonnenwelle eingebrachter Bohrungen, die ineinander münden.

Die Ölleitung verbindet die obere Stirnfläche der oberen Sonnenwelle ölleitend mit dem Axiallager. Zwischen einer ersten Mündung der Ölleitung und der oberen Stirnfläche besteht eine ölleitende Verbindung. Ebenso besteht zwischen einer zweiten Mündung der Ölleitung und dem Axiallager eine ölleitende Verbindung. Insbesondere kann die Ölleitung in die obere Stirnfläche und/oder das Axiallager münden.

Die Erfindung ist von Vorteil, da durch die überwiegend senkrechte Ausrichtung der Sonnenwellen das in der von der oberen Sonnenwelle ausgebildeten Ölleitung befindliche Öl durch die Schwerkraft in Richtung des Lagers gefördert wird. Maßnahmen, das Öl innerhalb der Ölleitung mit Druck zu beaufschlagen, sind nicht erforderlich. Dadurch vereinfacht sich die Ölversorgung des Lagers.

Öl, das aus dem Axiallager austritt, fließt aufgrund der überwiegend senkrechten Ausrichtung durch die Schwerkraft weiter abwärts und gelangt zu einem Sonnenrad, mit dem die untere Sonnenwelle drehfest verbunden ist. So wird auch dieses Sonnenrad mit Öl versorgt.

In der Erfindung ist eine weitere Ölleitung vorgesehen. Diese ist vorzugsweise gehäusefest. Insbesondere kann ein Getriebegehäuse selbst die weitere Ölleitung ausbilden.

Die weitere Ölleitung weist mindestens eine Austrittsöffnung auf, die so angeordnet ist, dass ein Übertritt von Öl von der Austrittsöffnung in die von der oberen Sonnenwelle ausgebildete Ölleitung ermöglicht wird.

Bevorzugt wird ein achsparalleler Verlauf der von der oberen Sonnenwelle ausgebildete Ölleitung und der Sonnenwellen. Dabei verläuft eine Mittelachse der Ölleitung parallel zu der Mittel- bzw. Symmetrieachse der Sonnenwellen. Insbesondere kann die von der oberen Sonnenwelle ausgebildete Ölleitung zentrisch angeordnet sein, sodass die Mitteleachse der Ölleitung mit der Mittel- bzw. Drehachse der Sonnenwellen übereinstimmt. Weiterhin kann die Ölleitung rotationssymmetrisch zu dieser Achse sein.

Eine zentrisch angeordnete Ölleitung hat den Vorteil, dass sich ihre Position relativ zu einer getriebefest angeordneten Austrittsöffnung bei einer Drehung der oberen Sonnenwelle nicht ändert. Dadurch ist ein Übertritt von der Austrittsöffnung in die Ölleitung unabhängig von einer Winkellage der oberen Sonnenwelle möglich.

Bei einer exzentrisch angeordneten Ölleitung kommt es weiterbildungsgemäß in mindestens einer Winkellage der oberen Sonnenwelle zu einem Ölübertritt. Die Winkellage kennzeichnet den Drehwinkel der oberen Sonnenwelle bezüglich einer Drehung um ihre Drehachse.

Die Weiterbildung zeichnet sich dadurch aus, dass sie einen Ölübertritt mit einfachen konstruktiven Mitteln ermöglicht. Insbesondere werden keine verschleiß- und defektanfälligen Dichtungen oder Drehdurchführungen benötigt.

Bevorzugt ist die von der oberen Sonnenwelle ausgebildete Ölleitung mit einem Trichter weitergebildet, der vorzugsweise in die obere Stirnfläche der oberen Sonnenwelle mündet. Der Trichter zeichnet sich dadurch aus, dass sein Durchmesser von unten nach oben hin kontinuierlich zunimmt. In seiner Mündung in die obere Stirnfläche hat der Trichter den größten Durchmesser.

Durch den vergrößerten Durchmesser wirkt der Trichter als Ölsammler. Durch den Trichter lässt sich vermeiden, dass größere Mengen von Öl über die obere Stirnfläche der oberen Sonnenwelle an der oberen Sonnenwelle entlang an dem Axiallager vorbeifließen. Dadurch verbessert sich die Ölversorgung des Axiallagers.

In einer bevorzugten Weiterbildung bilden die untere Stirnfläche der oberen Sonnenwelle und die obere Stirnfläche der unteren Sonnenwelle jeweils eine Lauffläche des Axiallagers. Handelt es sich bei dem Axiallager um ein Gleitlager, stützen sich die untere Stirnfläche der oberen Sonnenwelle und die obere Stirnfläche der unteren Sonnenwelle direkt bzw. über einen Schmierfilm gegeneinander ab. Dadurch vereinfacht sich der Aufbau des Axiallagers.

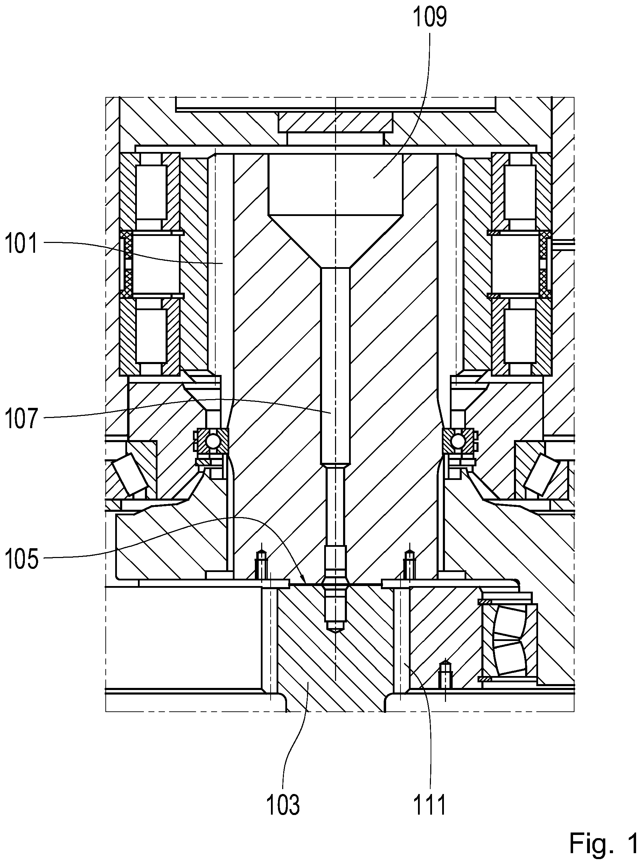

Ein bevorzugtes Ausführungsbeispiel der Erfindung ist in Fig. 1 dargestellt. Im Einzelnen zeigt:
Fig. 1 einen Ausschnitt eines Getriebes.

In Fig. 1 sind im Einzelnen eine obere Sonnenwelle 101 und eine untere Sonnenwelle 103 dargestellt. Die obere Sonnenwelle 101 und die untere Sonnenwelle 103 sind relativ zueinander um eine gemeinsame Drehachse verdrehbar.

Die beiden Sonnenwellen 101, 103 bilden mit jeweils einer ihrer Stirnflächen ein Axialgleitlager 105. In dem Axialgleitlager 105 stützen die Sonnenwellen 101, 103 sich in axialer Richtung gegeneinander ab.

Um das Axiallager 105 mit Öl zu versorgen, weist die obere Sonnenwelle 101 zentrisch angeordnete Bohrungen auf, die eine Ölleitung 107 bilden. Nach unten hin mündet die Ölleitung 107 in das Axialgleitlager 105. Nach oben hin ist die Ölleitung 107 in Form eines Trichters 109 erweitert. Eine Mündung des Trichters 109 liegt in einer oberen Stirnfläche der oberen Sonnenwelle 101.

Öl, das in den Trichter 109 gelangt, fließt aufgrund der Schwerkraft durch die Ölleitung 107 in das Axialgleitlager 105. Öl, das aus dem Axialgleitlager 105 austritt, fließt weiter in Richtung eines von der unteren Sonnenwelle 103 ausgebildeten Sonnenrads 111. Auf die Weise wird auch das Sonnenrad 111 mit Öl versorgt.

### Bezugszeichen

- 101: obere Sonnenwelle
- 103: untere Sonnenwelle
- 105: Axialgleitlager
- 107: Ölleitung
- 109: Trichter
- 111: Sonnenrad

## Patentansprüche

1. Getriebe mit mindestens zwei koaxial angeordneten Sonnenwellen (101, 103), deren Mittelachsen jeweils mit einer Vertikalen einen Winkel von weniger als 45° einschließen; wobei
mindestens ein Lager (105), das axial zwischen den Sonnenwellen (103, 105) angeordnet ist und die Sonnenwellen (101, 103) axial gegeneinander abstützt; wobei eine obere Sonnenwelle (101) mindestens eine Ölleitung (107) ausbildet, die eine obere Stirnfläche der oberen Sonnenwelle (101) ölleitend mit dem Lager (105) verbindet; **gekennzeichnet durch**
eine weitere Ölleitung mit mindestens einer Austrittsöffnung; wobei die Austrittsöffnung so angeordnet ist, dass es in mindestens einer Winkellage der oberen Sonnenwelle (101) zu einem Ölübertritt von der Austrittöffnung in die von der oberen Sonnenwelle (101) ausgebildete Ölleitung (107) kommt.

2. Getriebe nach Anspruch 1; **dadurch gekennzeichnet, dass**
die von der oberen Sonnenwelle (101) ausgebildete Ölleitung (111) einen Trichter (109) ausbildet.

3. Getriebe nach einem der vorhergehenden Ansprüche; **dadurch gekennzeichnet, dass**
eine untere Stirnfläche der oberen Sonnenwelle (101) und eine obere Stirnfläche der unteren Sonnenwelle (103) Laufflächen des Lagers (105) bilden.

## Claims

1. Gearbox having at least two coaxially disposed sun shafts (101, 103), the central axes of the latter and a vertical enclosing in each case an angle of less than 45°;
wherein at least one bearing (105) is provided, which axially is disposed between the sun shafts (103, 105) and axially supports the sun shafts (101, 103) in relation to one another;
wherein an upper sun shaft (101) configures at least one oil line (107) which in an oil-conducting manner connects an upper end face of the upper sun shaft (101) to the bearing (105);
**characterized by**
a further oil line having at least one exit opening; wherein the exit opening is disposed such that a transfer of oil from the exit opening into the oil line (107) configured by the upper sun shaft (101) takes place in at least one angular position of the upper sun shaft (101).

2. Gearbox according to Claim 1, **characterized in that** the oil line (111) configured by the upper sun shaft (101) configures a funnel (109).

3. Gearbox according to one of the preceding claims, **characterized in that** a lower end face of the upper sun shaft (101) and an upper end face of the lower sun shaft (103) form running surfaces of the bearing (105) .

## Revendications

1. Boîte de vitesses avec au moins deux pignons planétaires (101, 103) disposés dans le plan coaxial et dont les axes centraux forment respectivement avec une verticale un angle inférieur à 45° ;
au moins un palier de roulement (105) étant prévu, qui est disposé dans le plan axial entre les pignons planétaires (103, 105) et appuie l'un contre l'autre les pignons planétaires (101, 103) dans le plan axial ;
un pignon planétaire (101) supérieur formant au moins une conduite d'huile (107) reliant une surface avant supérieure du pignon planétaire supérieur (101) au palier de roulement (105) de façon à conduire l'huile ; **caractérisée par** la présence d'une conduite d'huile supplémentaire avec au moins une ouverture de sortie ; l'ouverture de sortie étant disposée de façon à déverser, dans au moins une position angulaire du pignon planétaire (101) supérieur, l'huile depuis l'ouverture de sortie jusque dans la conduite d'huile (107) réalisée par le pignon planétaire (101) supérieur.

2. Boîte de vitesses selon la revendication 1, **caractérisée en ce que** la conduite d'huile (111) réalisée par le pignon planétaire (101) supérieur forme un entonnoir (109).

3. Boîte de vitesses selon l'une quelconque des revendications précédentes, **caractérisée en ce qu'**une surface avant inférieure du pignon planétaire (101) supérieur et une surface avant supérieure du pignon planétaire inférieur (103) forment les surfaces de roulement du palier de roulement (105).
